# EUROPÄISCHE PATENTSCHRIFT

(11) **EP 1 798 946 B1**
(45) Veröffentlichungstag und Bekanntmachung des Hinweises auf die Patenterteilung: **21.02.2018**
(21) Anmeldenummer: 06125788.7
(22) Anmeldetag: 11.12.2006
(51) Int. Cl.: H04M 7/12, H04L 29/12, H04L 29/06, H04L 12/46

(54) **Gateway und Verfahren zur Kopplung von Kommunikationsnetzwerken**
Gateway and method for coupling communications networks
Passerelle et procédé destinée au couplage de réseaux de communication

(30) Priorität: 19.12.2005 DE 102005061047
(43) Veröffentlichungstag der Anmeldung: 20.06.2007
(60) Teilanmeldung: 10181762.5
(73) Patentinhaber: Vodafone Holding GmbH, 40213 Düsseldorf (DE)
(72) Erfinder: Hertle, Jochen, 85521 Ottobrunn (DE); Rosenberger, Frank, 40668 Meerbusch (DE)
(74) Vertreter: Weisbrodt, Bernd

(56) Entgegenhaltungen:
- EP-A- 1 558 006
- EP-A2- 1 035 716
- US-B1- 6 198 738

## Beschreibung

### Technisches Gebiet

Die Erfindung betrifft ein Gateway zur Kopplung von Zentraleinheiten von Kommunikationsnetzwerken zum Kommunikationsaustausch mit Kommunikationseinheiten zwischen den Kommunikationsnetzwerken.

Weiterhin betrifft die Erfindung ein Verfahren zur Verbindung von Kommunikationseinheiten unterschiedlicher Kommunikationsnetzwerke, wobei die Kommunikationsnetzwerke jeweils eine Zentraleinheit aufweisen, die miteinander über ein Gateway gekoppelt sind.

### Stand der Technik

Nach bekannten Verfahren zum Rufaufbau wird eine ISDN Nummer verwendet. Die ISDN-Nummer wird zum Verbindungsaufbau zwischen Teilnehmern entsprechend interpretiert. Mittlerweile setzt sich immer mehr auch die VoIP-Kommunikation im Internet durch.

Unter VoIP-Kommunikation wird eine Telefon-Kommunikation verstanden, welche eine IP-Adressierung verwendet, wie sie im Internet üblich ist. Dadurch lässt sich auch über das Internet telefonieren. "IP" ist die Abkürzung für "Internet Protocol." Dabei handelt es sich um ein Protokoll der TCP/IP-Familie zur Übertragung von Daten.

Zwischen herkömmlicher ISDN-Kommunikation und IP-Kommunikation bestehen grundsätzliche technische Netzwerkunterschiede. Daher ist es erforderlich, immer spezielle Einwahlknoten anzuwählen, die eine Verbindung zwischen den Teilnehmern unterschiedlicher Netzwerkstruktur herstellen. Dazu erhält der VoIP-Nutzer sowohl eine ISDN-Nummer, über die er über herkömmliche Kommunikationsnetze erreichbar ist, als auch eine IP-Adresse. Dies ist verwaltungstechnisch aufwendig und für die Teilnehmer sehr umständlich.

In der EP 1 558 006 A2 wird ein Adressverzeichnisdienst für einen Teilnehmer eines Kommunikationssystems beschrieben. Das Kommunikationssystem umfasst verschiedene Kommunikationsnetzwerke, wie beispielsweise Telefonnetzwerke oder Datennetzwerke. Über diese Netzwerke kann der Teilnehmer den Adressverzeichnisdienst über unterschiedliche Kommunikationsarten, wie Instant Messaging (Nachrichtensofortversand), E-Mail oder Web-Portal in Anspruch nehmen. Dazu hat der Adressverzeichnisdienst Zugriff sowohl auf eine firmeninternen, dem Teilnehmer zugeordnete Datenbank als auch auf externe Datenbanken anderer Firmen, generelle Telefonnummerndatendanken, ENUM- (Elektronic Number) Datendanken zum Konvertieren von Telefonnummern nach dem E.164-Standard in URI's (Universal Resource Identifieres) für das Internet und DNS- (Domain Name System) Datenbanken für Adressen im Internet.

Weiterhin beschreibt die EP 1558 006 A2 einen intelligenten Einwahlknoten, über den Anrufer durch Nutzung einer einzigen Telefonnummer eines Teilnehmers mit einer Vielzahl von Kommunikationsendgeräten des Teilnehmers verbunden werden können. Diese Endgeräte sind an unterschiedliche Netzwerke, z.B. ein Telefonnetz oder das Internet angebunden und stellen u.a. Festnetztelefone, Mobiltelefone, IP-Telefone und E-Mail- oder Instant-Messaging-Clients dar. Der Einwahlknoten dient somit quasi als Gateway zwischen dem Telefonnetz des Anrufers und den Netzwerken der Endgeräte und stellt entsprechende Adressen oder Rufnummern der Endgeräte zur Verfügung.

### Offenbarung der Erfindung

Aufgabe der Erfindung ist es daher, die bekannten Techniken in der Anwendung für den Teilnehmer zu vereinfachen, wobei nicht zwei Adressierungsarten erforderlich sind.

Erfindungsgemäß wird die Aufgabe mit einem Gateway gemäß Anspruch 1 gelöst.

Weiterhin wird die Aufgabe mit einem Verfahren gemäß Anspruch 6 gelöst.

Die Erfindung beruht grundsätzlich auf dem Prinzip, bei der Kommunikation zwischen zwei unterschiedlichen Kommunikationsnetzwerken mittels Gateway einmal angewählte Rufnummern in das jeweilige Anwahlverfahren des anderen Kommunikationsnetzwerkes zu konvertieren. Gegenüber herkömmlichen Verbindungsarten braucht ein Teilnehmer somit für jedes Kommunikationsnetzwerk nur noch eine einzige Adressierung, über die er von anderen Kommunikationsnetzwerken aus erreicht werden kann. Die entsprechende Interpretation der Adressierung erfolgt dabei durch das Gateway.

Das erfindungsgemäße Gateway verfügt über ein Adressregister zur Auffindung von Adressen unterschiedlicher Kommunikationsnetzwerke.

In dem Adressspeicher des Gateways lässt sich eine Auswahl von bevorzugten Adressen des Adressregisters eines Teilnehmers speichern. Mit einem solchen Adressspeicher kann ein Kommunikationsteilnehmer eine Adressenliste erstellen und im Gateway abspeichern. Damit wird ihm das Auffinden von Adressen erheblich erleichtert.
Vorteilhafte Ausgestaltungen des Gateways werden dadurch erzielt, indem die am meisten verwendeten Kommunikationsnetzwerke miteinander gekoppelt werden. Dazu gehört auch, dass eines der Kommunikationsnetzwerke als Mobilfunknetz ausgebildet ist, wobei dessen Kommunikationseinheiten als Mobilfunkendgeräte ausgebildet sind. Ebenfalls zu diesen häufig genutzten Kommunikationsnetzwerken gehören auch Festnetze, wobei dessen Kommunikationseinheiten als Festnetzgeräte, wie z.B. Telefone, Faxgeräte oder Computer, ausgebildet sind.
Eine bevorzugte Ausbildung des Gateways erhält man dadurch, indem wenigstens eines der zu koppelnden Kommunikationsnetzwerke eine IP-Adressierung zur Kommunikationsaufnahme verwendet. Damit können Kommunikationseinheiten mit VoIP-Kommunikation und umgekehrt problemlos Verbindung aufnehmen.
Durch alle diese Maßnahme kann ein Kommunikationsteilnehmer auf einfache Weise einen Kommunikationsteilnehmer eines anderen Kommunikationsnetzwerkes auffinden und über das Gateway mit ihm Kontakt aufnehmen.

Eine weitere bevorzugte Variante des erfindungsgemäßen Gateways ergibt sich durch Mittel für einen direkten Zugriff einer Kommunikationseinheit auf Daten in dem Gateway, insbesondere auf die Adressen eines Adressregisters. Durch den direkten Zugriff wird nicht nur die Geschwindigkeit für das Auffinden von Adressen beschleunigt, sondern auch der Verwaltungsaufwand für die Zentraleinheiten der jeweiligen Kommunikationsnetze erheblich reduziert.
Wegen der großen Bedeutung von Mobilfunknetzen und Festnetzen als Kommunikationsnetze für die Kommunikation, ist es zum einen besonderes vorteilhaft, wenn das erfindungsgemäße Verfahren ein Mobilfunknetz und zum andern ein Festnetz umfasst. Dabei werden als Kommunikationseinheiten Mobilfunkendgeräte bzw. Festnetzgeräte verwendet.

Vorteilhafterweise werden auch Kommunikationsnetzwerke mit einer IP-Adressierung zur Kommunikationsaufnahme von Kommunikationseinheiten verwendet. Durch diese Maßnahme werden insbesondere neuere Techniken, wie die VoIP-Kommunikation, für das erfindungsgemäße Verfahren verwendet.

In einer weiteren bevorzugten Variante des erfindungsgemäßen Verfahrens besteht die Möglichkeit, dass das Gateway eine Statusanzeige über Erreichbarkeit oder Nichterreichbarkeit der angewählten Kommunikationseinheit der anwählenden Kommunikationseinheit übermittelt. Auf diese Weise erhält ein Kommunikationsteilnehmer Hinweise darüber, ob er einen Kommunikationsteilnehmer überhaupt erreichen kann. Dies spart Netzkapazitäten, um nicht unnötige Verbindungsversuche vorzunehmen, die das Gateway und die Kommunikationsnetze belasten.

Weitere Vorteile ergeben sich aus dem Gegenstand der Unteransprüche sowie der Zeichnung mit der dazugehörigen Beschreibung.

### Kurze Beschreibung der Zeichnung

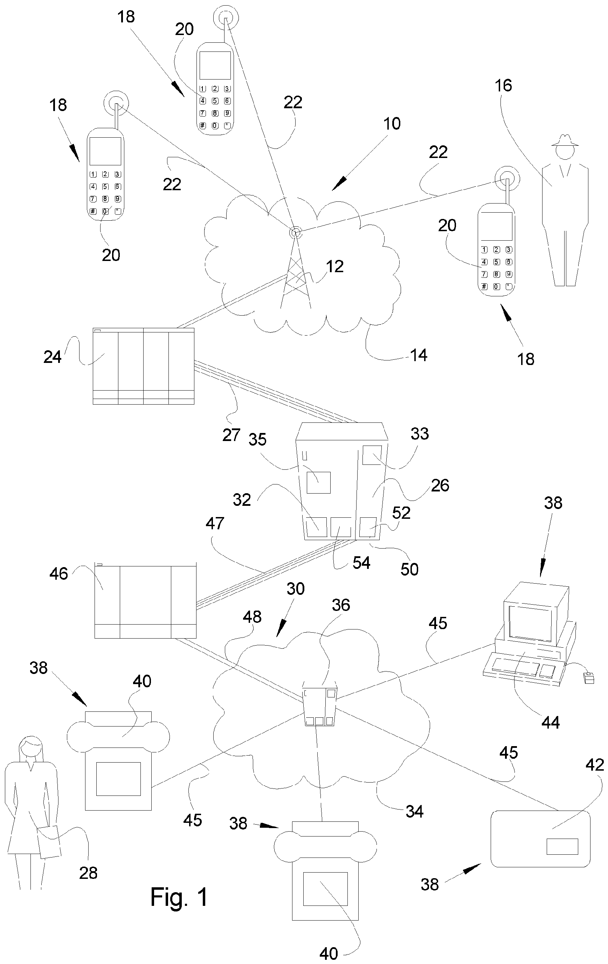

- Fig. 1: zeigt ein Ausführungsbeispiel eines erfindungsgemäßen Gateway.

### Bevorzugtes Ausführungsbeispiel

In Fig. 1 wird mit 10 ein erstes Kommunikationsnetzwerk bezeichnet. Das Kommunikationsnetzwerk 10 ist als Mobilfunknetz ausgebildet. Ein Funkmast 12 in einer Wolke 14 symbolisiert dieses Mobilfunknetz 10. Mobilfunkteilnehmer 16 können mit Kommunikationseinheiten 18, welche als Mobilfunkendgeräte 20 ausgebildet sind, über das Mobilfunknetz 10 kommunizieren. Das Mobilfunknetz 10 ist beispielsweise nach dem bekannten GSM- oder UMTS-Standard aufgebaut. Die Kommunikation mit diesen Mobilfunkendgeräten 20 wird durch Linien 22 in dieser Abbildung dargestellt. Die Koordination der Kommunikation im Mobilfunknetz 10 erfolgt insbesondere durch eine rechnergestützte Zentraleinheit 24.

Die Kommunikation zur Zentraleinheit 24 erfolgt über geeignete Kanäle. Die Zentraleinheit 24 ist wiederum mit einem rechnergestützten Gateway 26 über Verbindungen 27 gekoppelt. Wünscht der Mobilfunkteilnehmer 16 mit einem Teilnehmer 28, eines anders gearteten Kommunikationsnetzes 30 zu kommunizieren, wird der Kommunikationswunsch zunächst an die Zentraleinheit 24 geleitet. Von der Zentraleinheit 24 wird dieser Kommunikationswunsch an das Gateway 26 übermittelt. Das Gateway 26 speichert die Rufnummer bzw. die Adresse des Kommunikationswunsches in einem Speicher 32 zwischen und konvertiert die Rufnummer bzw. Adresse in eine entsprechende Rufnummer bzw. Adresse des anderen Kommunikationsnetzes 30 um. Für die Konvertierung und/oder Anpassung der Rufnummer bzw. der Adresse an das jeweilige andere Kommunikationsnetzwerk 10 bzw. 30 ist eine Konvertierungseinheit 33 in dem Gateway 26 vorgesehen. Eine Übermittlungseinheit 35 übermittelt den Kommunikationswunsch mit der Rufnummer an die Zentraleinheit 46 über Leitung 47 des jeweils anderen Kommunikationsnetzes 30.

Das zweite Kommunikationsnetz 30 ist im vorliegenden Ausführungsbeispiel ein als Wolke 34 symbolisiertes Festnetz 30. Dabei handelt es sich insbesondere um ein Kommunikationsnetzwerk, welches die im Internet verwendete VoIP-Kommunikation verwendet. Festnetzknoten 36 sammelt Kommunikationswünsche von Kommunikationseinheiten 38, welche zum einen als herkömmliche Telefone 40, Faxgeräte 42 oder Computer 44 ausgebildet sein können. Kommunikationseinheiten 38 sind dazu über Festnetzleitungen 45 mit dem Festnetzknoten 36 gekoppelt. Die Rufnummern bzw. Adressen der Kommunikationswünsche werden an eine rechnergestützte Zentraleinheit 46 des Festnetzes 30 über Verbindungen 48 weitergeleitet.

Weiterhin verfügt das Gateway 26 über einen Registerspeicher 50, in dem Adressregister 52 der verschiedenen Kommunikationsnetze gespeichert sind. Sowohl die Mobilfunkteilnehmer 16, als auch die Festnetzteilnehmer 28 haben mit ihren Kommunikationseinheiten 18 bzw. 38 jeweils Zugriff auf dieses Adressregister 52. Dadurch werden sie in die Lage versetzt Rufnummern, Namen bzw. Adressen von Teilnehmern des jeweiligen anderen Kommunikationsnetzes 10 bzw. 30 aufzufinden.

Jedem Kommunikationsteilnehmer 16, 28, von jedem an das Gateway angeschlossene Kommunikationsnetzwerk, wird es ermöglicht, in einem speziellen Speicher 54 des Gateways 26 Rufnummern, Namen bzw. Adressen seiner persönlichen Kontakte abzulegen, um sie bei einer späteren Kontaktaufnahme schneller aufzufinden.

Das Gateway 26 übermittelt jedem Kommunikationsteilnehmer 16 von jedem Kommunikationsnetzwerk 30 den Status eines anderen Teilnehmers 28, ob dies erreichbar oder nicht erreichbar ist.

## Patentansprüche

1. Gateway (26) zur Kopplung von Zentraleinheiten (24, 46) von Kommunikationsnetzwerken (10, 30) zum Kommunikationsaustausch mit Kommunikationseinheiten (18, 38) zwischen den Kommunikationsnetzwerken (10, 30), umfassend
a) eine Speichereinheit (32) zum Zwischenspeichern einer von einem Kommunikationsteilnehmer (16) angewählten Adresse einer Kommunikationseinheit (18), welche einem anderen Kommunikationsteilnehmer (28) zugeordnet ist,
b) eine Konvertierungseinheit (33), welche die in der Speichereinheit (32) abgelegte Adresse des angewählten Kommunikationsteilnehmers (28) an das jeweilige Kommunikationsnetzwerk (30) des angewählten Kommunikationsteilnehmers (28) anpasst, und
c) eine Übermittlungseinheit (35), welche der Zentraleinheit (46) des jeweiligen Kommunikationsnetzes (30), welches dem angewählten Kommunikationsteilnehmer (28) zugeordnet ist, die konvertierte Adresse für einen Verbindungsaufbau übermittelt, und
d) einen Registerspeicher (50), in welchem ein Adressregister (52) zum Auffinden von unterschiedlichen Kommunikationsnetzen (10, 30) zugehörigen Adressen vorgesehen ist,
**gekennzeichnet durch**
e) einen als Adressspeicher ausgebildeten speziellen Speicher (54), in welchem durch einen Kommunikationsteilnehmer (16, 26) aus dem Adressregister (52) ausgewählte Adressen persönlicher Kontakte dieses Kommunikationsteilnehmers (16, 26) ablegbar sind.

2. Gateway (26) nach Anspruch 1, **dadurch gekennzeichnet, dass** eines der Kommunikationsnetzwerke (10) als Mobilfunknetz (14) ausgebildet ist, wobei dessen Kommunikationseinheiten (18) als Mobilfunkendgeräte (20) ausgebildet sind.

3. Gateway (26) nach einem der Ansprüche 1 oder 2, **dadurch gekennzeichnet, dass** eines der Kommunikationsnetzwerke (30) als Festnetz (34) ausgebildet ist, wobei dessen Kommunikationseinheiten (38) als Festnetzgeräte (40, 42, 44) ausgebildet sind.

4. Gateway (26) nach einem der Ansprüche 1 bis 3, **dadurch gekennzeichnet, dass** in einem der Kommunikationsnetzwerke (30) eine IP-Adressierung zur Kommunikationsaufnahme von Kommunikationseinheiten (38), insbesondere zur VolP-Kommunikation, vorgesehen ist.

5. Gateway (26) nach einem der Ansprüche 1 bis 4, **dadurch gekennzeichnet, dass** Mittel für einen direkten Zugriff einer Kommunikationseinheit (18, 38) auf Daten im Gateway (26), insbesondere auf die Adressen des Adressregisters (52), vorgesehen sind.

6. Verfahren zur Verbindung von Kommunikationseinheiten (18, 38) unterschiedlicher Kommunikationsnetzwerke (10, 30), wobei die Kommunikationsnetzwerke (10, 30) jeweils eine Zentraleinheit (24, 46) aufweisen, die miteinander über ein Gateway (26) gekoppelt sind, umfassend die Schritte
a) Weiterleitung einer Adressierungseingabe einer anwählenden Kommunikationseinheit (18) über deren zugehörige Zentraleinheit (24) an das Gateway (26),
b) Konvertierung der Adressierungseingabe durch das Gateway (26) und Weiterleitung dieser an die Zentraleinheit (46) des angewählten Kommunikationsnetzwerkes (30),
c) Herstellung einer Kommunikationsverbindung zwischen der Zentraleinheit (46) des angewählten Kommunikationsnetzwerkes (30), dem Gateway (26) und dem anwählenden Kommunikationsnetzwerk (10) zur Verbindung der anwählenden und der angewählten Kommunikationseinheit (18, 38) miteinander,
d) wobei ein Auffinden der Adresse der angewählten Kommunikationseinheit (26) mittels eines Registerspeichers (50) erfolgt, in welchem ein Adressregister (52) zum Auffinden von unterschiedlichen Kommunikationsnetzen (10, 30) zugehörigen Adressen vorgesehen ist,
**dadurch gekennzeichnet, dass**
e) eine Speicherung von durch einen Kommunikationsteilnehmer (16, 26) aus dem Adressregister (52) ausgewählten Adressen persönlicher Kontakte dieses Kommunikationsteilnehmers (16, 26) in einem als Adressspeicher ausgebildeten speziellen Speicher (54) erfolgt.

7. Verfahren nach Anspruch 6, **dadurch gekennzeichnet, dass** eines der Kommunikationsnetzwerke (10) als Mobilfunknetz (14) ausgebildet ist, wobei dessen Kommunikationseinheiten (18) als Mobilfunkendgeräte (20) ausgebildet sind.

8. Verfahren nach einem der Ansprüche 6 oder 7, **dadurch gekennzeichnet, dass** eines der Kommunikationsnetzwerke (30) als Festnetz (34) ausgebildet ist, wobei dessen Kommunikationseinheiten (38) als Festnetzgeräte (40, 42, 44) ausgebildet sind.

9. Verfahren nach einem der Ansprüche 6 bis 8, **dadurch gekennzeichnet, dass** in einem der Kommunikationsnetzwerke (30) eine IP-Adressierung zur Kommunikationsaufnahme von Kommunikationseinheiten (38), insbesondere zur VolP-Kommunikation, vorgesehen ist.

10. Verfahren nach einem der Ansprüche 6 bis 9, **dadurch gekennzeichnet, dass** das Gateway (26) eine Statusanzeige über Erreichbarkeit oder Nichterreichbarkeit der angewählten Kommunikationseinheit (38) an die anwählende Kommunikationseinheit (18) übermittelt.

## Claims

1. A gateway (26) for coupling central units (24, 46) of communication networks (10, 30) for the communication exchange with communication units (18, 38) between the communication networks (10, 30), comprising
a) a storage unit (32) for storing an address of a communication unit (18) temporarily, which address has been called by a communication partner (16) and which communication unit (18) is assigned to another communication partner (28),
b) a conversion unit (33) which adapts the address of the called communication partner (28), which address has been stored in the storage unit (32), to the respective communication network (30) of the called communication partner (28), and
c) a transmission unit (35) which transmits the converted address to the central unit (46) of the respective communication network (30) which is assigned to the called communication partner (28) for establishing a connection, and
d) a register memory (50) in which an address register (52) for finding addresses that belong to different communication networks (10, 30) is provided,
**characterized by**
e) a special storage (54) which is configured as an address storage, in which addresses that have been selected from the address register (52) by a communication partner (16, 26) and which belong to personal contacts of this communication partner (16, 26) can be stored.

2. A gateway according to claim 1, **characterized in that** one of the communication networks (10) is configured as a mobile radio network (14), wherein the communication units (18) thereof are configured as mobile terminals (20).

3. A gateway (26) according to one of the claims 1 or 2, **characterized in that** one of the communication networks (30) is configured as a land-line network (34), wherein the communication units (38) thereof are configured as land-line terminals (40, 42, 44).

4. A gateway (26) according to one of the claims 1 to 3, **characterized in that** an IP addressing for starting a communication between communication units (38), in particular a VoIP communication, is provided in one of the communication networks (30).

5. A gateway (26) according to one of the claims 1 to 4, **characterized in that** means for a direct access of a communication unit (18, 38) to data in the gateway (26), in particular the addresses of the address register (52), are provided.

6. A method for connecting communication units (18, 38) of different communication networks (10, 30), wherein the communication networks (10, 30) respectively comprise a central unit (24, 46) which are coupled to each other via a gateway (26), comprising the steps :
a) forwarding an addressing input of a calling communication unit (18) via the associated central unit (24) thereof to the gateway (26),
b) conversion of the addressing input by the gateway (26) and forwarding this one to the central unit (46) of the called communication network (30),
c) establishing a communication connection between the central unit (46) of the called communication network (30), the gateway (26) and the calling communication network (10) for connecting the calling and the called communication unit (18) to each other,
d) wherein the address of the called communication unit (26) will be found by means of a register memory (50), in which an address register (52) for finding addresses that belong to different communication networks (10, 30) is provided,
**characterized in that**
e) a storage of addresses that have been selected from the address register (52) by a communication partner (16, 26) and which belong to personal contacts of this communication partner (16, 26) will be stored in a special storage (54) which is configured as an address storage.

7. A method according to claim 6, **characterized in that** one of the communication networks (10) is configured as a mobile radio network (14), wherein the communication units (18) thereof are configured as mobile terminals (20).

8. A method according to one of the claims 6 or 7, **characterized in that** one of the communication networks (30) is configured as a land-line network (34), wherein the communication units (38) thereof are configured as land-line terminals (40, 42, 44).

9. A method according to one of the claims 6 to 8, **characterized in that** an IP addressing for starting a communication between communication units (38), in particular a VoIP communication, is provided in one of the communication networks (30).

10. A method according to one of the claims 6 to 9, **characterized in that** the gateway (26) transmits a status indication with respect to the accessibility or inaccessibility of the called communication unit (38) to the calling communication unit (18).

## Revendications

1. Passerelle (26) pour coupler des unités centrales (24, 46) de réseaux de communication (10, 30) pour l'échange de communication avec des unités de communication (18, 38) entre les réseaux de communication (10, 30), comprenant:
a) une unité de stockage (32) pour stocker temporairement une adresse, qui a été appelée par un participant à la communication (16), d'une unité de communication (18), qui est attribuée à un autre participant à la communication (28),
b) une unité de conversion (33), qui adapte l'adresse stockée dans l'unité de stockage et appartenant au participant à la communication appelé (28) au réseau de communication respectif (30) du participant à la communication appelé (28), et
c) une unité de transmission (35), qui transmet l'adresse convertie à l'unité centrale (46) du réseau de communication respectif (30), qui est attribué au participant à la communication (28) appelé, pour établir une connexion,
d) un banc de registres (50), dans lequel un registre d'adresses (52) est prévu pour trouver des adresses appartenant à des réseaux de communication différents (10, 30),
**caractérisée par**
e) une mémoire spécifique (54), qui est configurée comme une mémoire d'adresses, dans laquelle des adresses sélectionnées dans le banc de registres par un participant à la communication (16, 26) et appartenant aux contacts personnels de ce partenaire à la communication (16, 26) peuvent être stockées.

2. Passerelle (26) selon la revendication 1, **caractérisée en ce que** l'un des réseaux de communication (10) est configuré comme un réseau radio mobile (14), les unités de communication (18) de celui-ci étant configurées comme des terminaux mobiles (20).

3. Passerelle (26) selon l'une des revendications 1 ou 2, **caractérisée en ce que** l'un des réseaux de communication (30) est configuré comme un réseau téléphone fixe (34), les unités de communication (38) de celui-ci étant configurées comme des terminaux de réseau fixe (40, 42, 44).

4. Passerelle (26) selon l'une des revendications 1 à 3, **caractérisée en ce qu'**un adressage IP est prévu dans un des réseaux de communication (30) pour établir une communication d'unités de communication (38), notamment une communication VoIP.

5. Passerelle (26) selon l'une des revendications 1 à 4, **caractérisée en ce que** des moyens destinés à un accès direct d'une unité de communication (18, 38) à des données dans la passerelle (26), notamment aux adresses du registre d'adresses (52), sont prévus.

6. Procédé pour la liaison d'unités de communication (18, 38) de réseaux de communication différents (10, 30), les réseaux de communication (10, 30) comprenant chacun une unité centrale (24, 46), qui sont couplées l'une à l'autre par une passerelle (26), comprenant les étapes de :
a) retransmettre une entrée d'adressage d'une unité de communication appelant (18) via l'unité centrale associée de celle-ci (24) à la passerelle (26),
b) convertir l'entrée d'adressage par la passerelle (26) et retransmettre celle-ci à l'unité centrale (46) du réseau de communication appelé (30),
c) établir une connexion de communication entre l'unité centrale (46) du réseau de communication appelé (30), la passerelle (26) et le réseau de communication appelant (10) pour connecter l'unité de communication appelant et l'unité de communication appelée (18, 38) l'une à l'autre,
d) dans lequel l'adresse de l'unité de communication appelée (26) trouvée par moyen d'une mémoire de registres (52), dans laquelle
**caractérisé en ce que**
e) des adresses sélectionnées dans le banc de registres (52) par un participant à la communication (16, 26) et appartenant aux contacts personnels de ce partenaire à la communication (16, 26) sont stockées dans une mémoire spécifique (54), qui est configurée comme une mémoire d'adresses.

7. Procédé selon la revendication 6, **caractérisé en ce que** l'un des réseaux de communication (10) est configuré comme un réseau radio mobile (14), les unités de communication (18) de celui-ci étant configurées comme des terminaux mobiles (20).

8. Procédé selon l'une des revendications 6 ou 7, **caractérisée en ce que** l'un des réseaux de communication (30) est configuré comme un réseau téléphone fixe (34), les unités de communication (38) de celui-ci étant configurées comme des terminaux de réseau fixe (40, 42, 44).

9. Procédé selon l'une des revendications 6 à 8, **caractérisée en ce qu'**un adressage IP est prévu dans un des réseaux de communication (30) pour établir une communication d'unités de communication (38), notamment une communication VoIP.

10. Procédé selon l'une des revendications 6 à 9, **caractérisée en ce que** la passerelle (26) transmet un affichage du statut par rapport à l'accessibilité ou l'inaccessibilité de l'unité de communication appelée (38) à l'unité de communication appelant (18).
